# EUROPEAN PATENT APPLICATION

(11) **EP 1 031 791 A1**
(43) Date of publication of application: **30.08.2000**
(21) Application number: 00200606.2
(22) Date of filing: 22.02.2000
(51) Int. Cl.: F23J 15/02, F23J 15/06, B01D 47/05

(54) **Smoke treatment apparatus and smoke treatment system using smoke treatment apparatus**

(30) Priority: 22.02.1999 JP 4389099; 25.02.1999 JP 4912899
(71) Applicant: Owa, Hiroshi, Aichi-ken, Tokai-shi (JP)
(72) Inventor: Owa, Hiroshi, Aichi-ken, Tokai-shi (JP)
(74) Representative: Ottevangers, Sietse Ulbe

(57) **Abstract**

A smoke treatment apparatus including a casing (10) having smoke introduction portions (11) and a discharge port (12) for treated air, baffle plates (13) having rising passages, an upper and lower space (16,14) formed above and below the baffle plates, a suppression plate (17) provided in the upper space (16), a blower (18) provided at the casing (10), and a bottom of the casing (10a) storing water, wherein the contact between the water and burned gas and the entrainment of the burned gas by the water are utilized to efficiently treat the smoke, collect the foreign matter separated from the smoke, and lower the temperature of the burned gas and thereby avoid the production of dioxin, and a smoke treatment system using the same.

## Description

### BACKGROUND OF THE INVENTION

### 1. Field of the Invention

The present invention relates to a smoke treatment apparatus and to a smoke treatment system using such a smoke treatment apparatus.

### 2. Description of the Related Art

In the past, numerous technologies have been developed for treatment of the smoke from incinerators burning refuse including plastics, paints, volatile oils, wood, dust, and other flammable substances (hereinafter referred to simply as "smoke"). Several are considered significant and are being put to practical use, so representative examples will be described in brief here based on Japanese unexamined patent publications.

For example, there are systems treating the smoke by water such as systems passing the smoke through a curtain of water or systems rapidly cooling the smoke utilizing sprays of water. Japanese Unexamined Patent Publication (Kokai) No. 10-227436 discloses an incineration treatment method and apparatus of this type. This method sprays water from spray nozzles to cool the exhaust gas so as to lower the temperature of the exhaust gas or ensure the complete incineration of medical waste.

There are also incineration apparatuses for ensuring complete combustion of burned gas. For example, Japanese Unexamined Patent Publication (Kokai) No. 9-60835 discloses a fluid-bed type incinerator featuring an improvement in the secondary combustion chamber. The secondary combustion chamber is provided with a plurality of guide plates for making the incompletely burned gas flow along a meandering path in substantially the horizontal direction. The incinerator is further provided with a secondary combustion air feed mechanism for supplying air for secondary combustion in a direction against the flow of the incompletely burned gas flowing along the guide plates. The incompletely burned gas is made to meander in this way to ensure a sufficient dwell time and thereby achieve complete combustion of the incompletely burned gas.

Summarizing the problems to be solved by the invention, Japanese Unexamined Patent Publication (Kokai) No. 10-227436 discloses a system for cooling burned gas by water to lower its temperature and ensure complete incineration of medical waste. There are problems, however, such as the production of dioxin when contact with the water is insufficient and reoccurrence of dioxin when rapid cooling by water cannot be achieved. Further, there are the problems of the discharge of the water contaminated by use for cooling and secondary pollution due to the after-treatment of the water etc.

Further, Japanese Unexamined Patent Publication (Kokai) No. 9-60835 uses detouring of the burned gas and generation of an eddy flow etc. to promote complete combustion of the burned gas and thereby avoid the production of smoke, harmful gas, etc. It is true that complete combustion is promoted by increasing the dwell time of the burned gas in the gas combustion chamber and increasing the contact with air. Since sufficient contact with water and reliable rapid cooling are not achieved, however, the measures taken against dioxin, currently a significant social issue, remain insufficient.

### SUMMARY OF THE INVENTION

A first object of the present invention is to ensure sufficient contact between the smoke and water and reliable rapid cooling to efficiently treat dioxin or to recover the soot, ash, dust, and other foreign matter (hereinafter referred to as "foreign matter") separated from the smoke as a solid mass and thereby prevent the discharge of dioxin.

According to a first aspect of the present invention for achieving the first object, there is provided a smoke treatment apparatus comprising a casing having a plurality of through holes, slits, or other introduction portions for intake of smoke and a discharge port for the treated gas, air, or other gas, an internal bottom plate provided at the bottom of the casing, a downflow port provided in the internal bottom plate, a pipe for intake of water provided at the bottom part of the casing, and a blower provided at the discharge port, the smoke treatment apparatus causing the smoke introduced to the casing to rise together with the water present at the bottom from the introduction portions toward the discharge port while swirling in the vertical direction so as to lower its temperature and remove foreign matter and guiding the lowered temperature and scrubbed air through the discharge port to outside the casing.

A second object of the present invention is to utilize an increased dwell time to achieve sufficient contact between the smoke and water and reliable rapid cooling to efficiently treat the dioxin or to recover the foreign matter separated from the smoke as a solid mass to avoid the production of dioxin.

According to a second aspect of the present invention for achieving the second object, there is provided a smoke treatment apparatus comprising a casing having a plurality of through holes, slits, or other introduction portions for intake of smoke and a discharge port for the treated gas, air, or other gas, at least one baffle plate provided at the casing and having a rising passage, an internal bottom plate provided at the bottom of the casing, a downflow port provided in the internal bottom plate, a pipe for intake of water provided at the bottom of the casing, and a blower provided at the discharge port, the smoke treatment apparatus causing the smoke introduced to the casing to rise together with the water present at the bottom from the introduction portions toward the discharge port while swirling in the vertical direction so as to lower its temperature and remove foreign matter and guiding the lowered temperature and scrubbed air through the discharge port to outside the casing.

According to a third aspect of the present invention for achieving the second object, there is provided a smoke treatment apparatus comprising a casing having a plurality of through holes, slits, or other introduction portions for intake of smoke and a discharge port for the treated gas, air, or other gas, at least one baffle plate provided spaced from each other at the casing and each having a rising passage, an internal bottom plate provided at the bottom of the casing, a downflow port provided in the internal bottom plate, a pipe for intake of water provided at the bottom of the casing, a suppression plate provided above the baffle plates of the casing, a discharge passage provided between the suppression plate and the casing, and a blower provided at the discharge port communicated with the discharge passage, the smoke treatment apparatus causing the smoke introduced to the casing to rise together with the water present at the bottom from the introduction portions toward the discharge port while swirling in the vertical direction so as to lower its temperature and remove foreign matter and guiding the lowered temperature and scrubbed air through the discharge part to outside the casing.

A third object of the present invention is to enable reliable trapping and recovery of dioxin produced by the smoke treatment or dust produced by the mist treatment utilizing a simple system.

According to a fourth aspect of the invention for achieving the third object, there is provided a smoke treatment system comprised of an incinerator, at least one smoke treatment apparatus comprised of a casing having a plurality of through holes, slits, or other introduction portions for intake of smoke communicated with the incinerator through a flue and a discharge port for the treated gas, air, or other gas, an internal bottom plate provided at the bottom of the casing, a downflow port provided in the internal bottom plate, a pipe for intake of water provided at the bottom of the casing, and a blower provided at the discharge port, and a deodorizer, the smoke treatment system causing the smoke introduced to the casing to rise together with the water present at the bottom of the casing of one smoke treatment apparatus from the introduction portions toward the discharge port while swirling so as to lower the temperature and remove foreign matter and guiding the lowered temperature and scrubbed air through the discharge port and pipe to another smoke treatment apparatus of the same configuration to scrub it, guiding the scrubbed air to the deodorizer, and deodorizing it by the deodorizer.

### BRIEF DESCRIPTION OF THE DRAWINGS

These and other objects and features of the present invention will become clearer from the following description of the preferred embodiments given with reference to the attached drawings, wherein:
Fig. 1 is an enlarged sectional view of a smoke treatment apparatus;

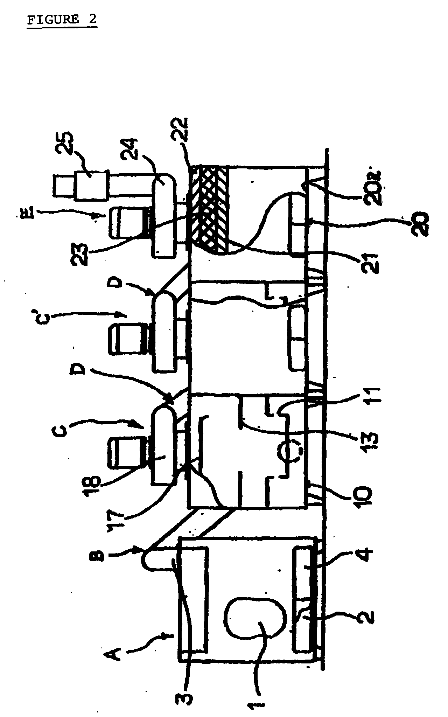

Fig. 2 is a partially cutaway side schematic view of a smoke treatment system using smoke treatment apparatuses;

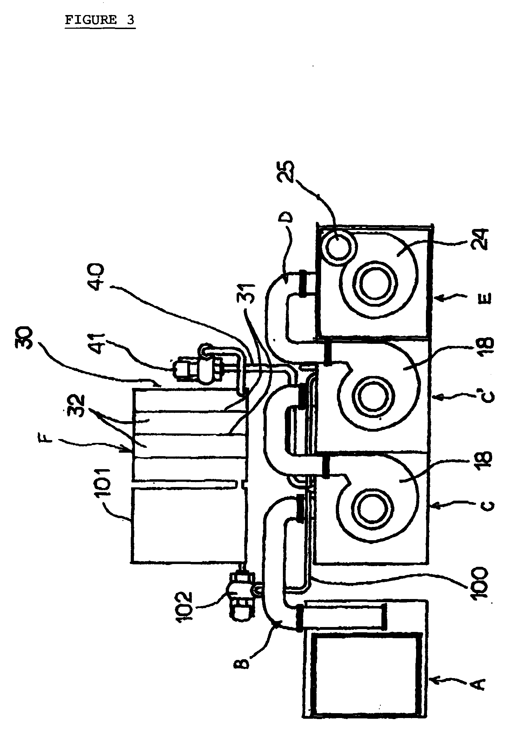

Fig. 3 is a plan schematic view of a smoke treatment system using smoke treatment apparatuses;
Fig. 4 is an enlarged sectional view of another smoke treatment apparatus;
Fig. 5 is an enlarged sectional view of still another smoke treatment apparatus; and
Fig. 6 is an enlarged sectional view of still another smoke treatment apparatus.

### DESCRIPTION OF THE PREFERRED EMBODIMENTS

First, explaining the smoke treatment apparatus, the burned gas produced by the combustion in the combustion chamber of an incinerator is guided through a flue to the inside of a casing of the smoke treatment apparatus. The burned gas guided to the smoke treatment apparatus is then introduced through the introduction portions provided in the casing to the bottom of the casing by suction by a blower. The introduced approximately 800 °C burned gas (restricted in rise by the battle plates positioned above) swirls in an eddy flow in the casing (inside lower space of casing). Analyzing the eddy flow in detail, the gas flows in the casing (vertical direction in the space) as a swirl flow in the vertical direction. The swirl flow moves in a ring in the circumferential direction of the space. Therefore, the flow may be grasped overall as a ring-shaped swirl flow. On the other hand, the water or treated water or other fluid (hereinafter referred to as "water") of a water tank guided into the casing through the pipe provided at the bottom of the casing is lifted upward in the casing along with the ring-shaped swirl flow of the burned gas. This lifted water flows in a ring-shaped swirl flow similar to the burned gas. Therefore, the burned gas and water are made to contact each other in this area of space and the burned gas is entrained in the water of the ring-shaped swirl flow. Using this entrainment of the burned gas and the dispersion and suction in the casing, the burned gas is lowered in temperature (lowered to about 80 °C). By entraining foreign matter by the water of the ring-shaped swirl flow, the discharge of foreign matter to the outside is eliminated. Further, the foreign matter is collected to form a mass which collects on the internal bottom surface of the casing by the difference in specific gravity. This burned gas is introduced from the introduction portions of the casing, so there is the advantage that the blower can be made smaller in capacity. The scrubbed gas becomes approximately 50 °C in temperature and is easy to handle without danger. The gas is guided through a pipe to the next machine or the same smoke treatment apparatus.

Further, the foreign matter deposited on the bottom of the casing is recovered, but the foreign matter forms a mass, is easy to handle, and becomes of a shape and dimensions suitable for disposal etc. On the other hand, the water is sent through the pipe to the recirculated water coolant, then is sent to the water tank for reuse.

Further, in the example having baffle plates and a suppression plate, the water entraining the burned gas rises further by the suction force of the blower together with the burned gas. The rising water and burned gas are restricted in rise by the suppression plate positioned above, so the water and burned gas next form an eddy flow in the upper space of the casing to form a ring-shaped swirl flow. The subsequent contact and flow are substantially the same as the movement in the lower space. That is, the burned gas is further lowered in temperature and the foreign matter entrained in the water of the ring-shaped swirl flow to prevent the foreign matter from being discharged to the outside and cause it to collect at the internal bottom surface of the casing. The scrubbed gas becomes approximately 50 °C in temperature and is easy to handle without danger. The gas is guided through the pipe to the next machine or the same smoke treatment apparatus. The rest of the movement is substantially the same as the above example.

The present invention will be explained in further detail next with reference to examples. The present invention is mainly comprised of an incinerator A, a smoke treatment apparatus C connected to the incinerator A through the flue B, a deodorizer E communicated with the smoke treatment apparatus C through a pipe D, and a recirculated water cooler F provided when necessary.

The incinerator A is provided with a combustion chamber 1, air intake port 2, burned gas discharge port 3, door 4 and the like, that is, is of an ordinary configuration.

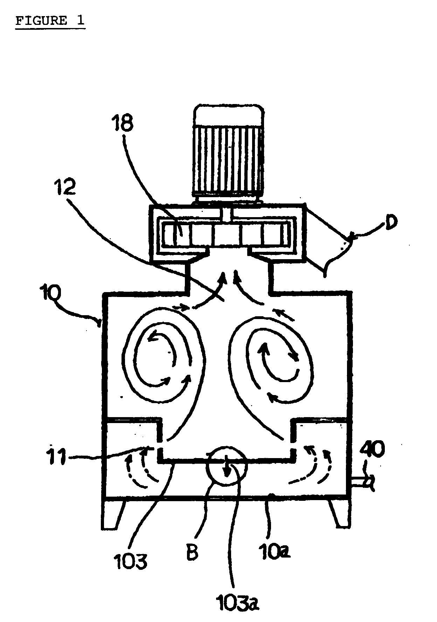

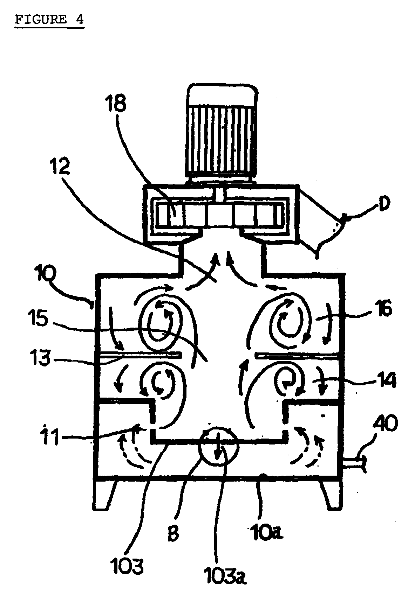

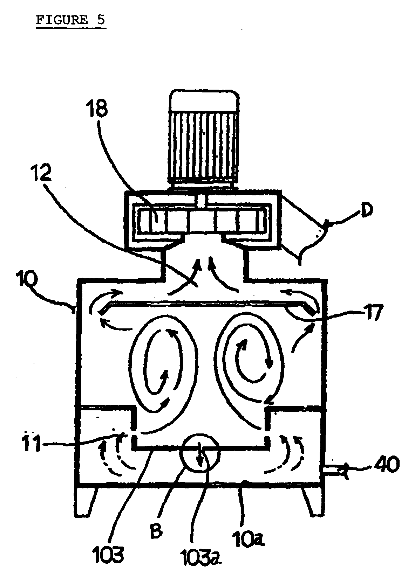

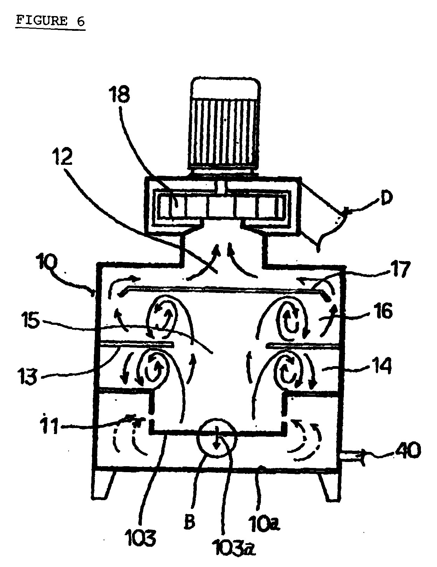

There are various systems of smoke treatment apparatuses C: the internal bottom plate system of Fig. 1, the baffle plate system of Fig. 4, the suppression plate system of Fig. 5, and the composite system of Fig. 6.

The internal bottom plate system of Fig. 1 comprises a casing 10 exhibiting a substantially cylindrical shape (one example, same below), a plurality of through holes, slits, or other introduction portions 11 for introduction of burned gas provided at the lower part of the casing 10, a discharge port 12 for the treated gas, a rising passage 15 of the casing 10, and a motor-equipped blower 18 communicated with the discharge port 12 of the treated gas (including blower, suction means, or blower means). The burned gas introduced from the introduction portions 11 rises in the casing in the negative pressure state while forming a ring-shaped swirl flow. Further, the water guided to the bottom of the casing 10 through a pipe (explained later) provided at the bottom of the casing 10 rises along with the rising burned gas, and flows forming a ring-shaped swirl flow together with the burned gas for contact of the water with the burned gas and for entrainment of the burned gas by the water. While the water and burned gas are brought in contact and the burned gas is entrained by the water, the gas rises through the rising passage 15. Further, through the contact with the burned gas and the entrainment of the burned gas by the water, the temperature is lowered and the foreign matter etc. are removed so that the gas may be discharged to the atmosphere as scrubbed air. Further, the internal bottom plate 103 provided somewhat higher than the bottom 10a in the casing 10 is provided with through holes, holes, bores, and other downflow ports 103a. The water falling as a ring-shaped swirl flow in the casing 10 is separated and/or cooled for reuse at the later explained recirculated water cooler F. In this example, the burned gas introduced from the introduction portions 11 is reliably guided into the casing 10. Further, the collected dust is suitably removed. In the figure, 100 indicates a pipe. Using this pipe 100, water in the water tank 101 is sent to the casing 10. Further, in the figure, 102 indicates a pump provided at the pipe 100.

In the baffle plate system of Fig. 4, the casing 10 is provided with at least one baffle plate 13, a lower space 14 provided between the bottom 10a in the casing 10 and the baffle plate 13, a rising passage 15 provided at the substantial center of the baffle plate 13 and comprised of at least one hole of a ring shape and single form, etc., clearances of the same, passages of the same configuration, etc., and an upper space 16 formed above the battle plates 13. A ring-shaped swirl flow is produced in the lower space 14 and the upper space 16. The temperature is lowered and the foreign matter etc. is removed through the contact between the water and burned gas by the upper and lower spaces 16, 14 and the entrainment of the burned gas by the water. The result is discharged into the atmosphere as scrubbed air. The rest of the configuration is substantially the same as the above example.

In the suppression plate system of Fig. 5, the suppression plate 17 provided at the upper part of the casing 1 ensures the ring-shaped swirl flow produced in the casing 10 and the dwell time for the contact between water and burned gas and the entrainment of the burned gas by the water. The rest of the configuration is substantially the same as the above example.

In the composite system of Fig. 6, the casing 10 is provided with at least one baffle plate 13, a lower space 14 provided between the bottom 10a of the casing and the baffle plate 13, a rising passage 15 provided at the substantial center of the baffle plate 13, an upper space 16 formed above the baffle plates 13, a suppression plate 17, and a motor-equipped blower 18. The burned gas sucked in from the introduction portions 11 rises in the casing 10 and flows in the lower space 14 as a ring-shaped swirl flow. Further, the water present at the bottom 10a in the casing 10 rises along with the rising burned gas and flows as a ring-shaped swirl flow together with the burned gas for the contact between the water and burned gas and the entrainment of the burned gas by the water. Further, it rides over the baffle plate 13 and rises through the rising passage 15, then moves in substantially the same way as the lower space 14 in the upper space 16. Through the contact of the water and burned gas and entrainment of the burned gas by the water by the upper and lower spaces 16 and 14, the temperature is lowered and the foreign matter etc. are removed. The result is discharged into the atmosphere as scrubbed air. Further, the collected dust etc. is discharged along with the water. The configuration provided with the baffle plates 13 and/or suppression plate 17 explained above is not limited to the illustrations and explanation. In the illustrated example, two smoke treatment apparatuses C were provided in parallel, but it is also possible to provide one or more than two as well. In this double configuration, the smoke treatment apparatuses C can be made smaller in size and the blower 18 can be made smaller in capacity.

The deodorizer E is comprised of a casing 20 exhibiting a substantially box shape, a bottom 20a storing the water in the casing 20, two layers of filters 21 and 22, a deodorizer layer 23, a motor-equipped blower 24 (including a blower, suction means, or blower means). The pipe D opens into the deodorizer E. Therefore, the treated air introduced from the pipe D is sprayed into the water in the deodorizer E by the suction of the blower 24, then becomes bubbles which rise to the water surface. Next, it is deodorized by the two layers of filters 21 and 22 and the deodorizing layer 23 to become deodorized scrubbed air (water vapor) which is dispersed into the atmosphere. Further, it is ideal to provide a blower 24 for the deodorizer E, but the invention is not limited to this. Reference numeral 25 shows a smokestack.

The recirculated water cooler F is comprised of a casing 30 exhibiting a substantially box shape, partition plates 31 (or filter) provided at the casing 30, and separation chambers 32 formed by the partition plates 31. Therefore, the water introduced from the casing 10 through the pipe 40 to the recirculated water cooler F is separated and/or cooled by the recirculated water cooler F, guided to the water tank 101, and reused. Further, it is also possible to make use of centrifugation, separation by swash plates, chemical treatment, etc. Further, the recirculated water cooler F is connected with the smoke treatment apparatuses C, C' or the deodorizer E etc.

In the figure, 41 indicates a pump provided at the pipe 40.

Summarizing the effects of the invention, the first aspect of the present invention provides a casing, having introduction portions for the smoke, a discharge port for the treated air, and a blower, with an internal bottom plate having a downflow port and a pipe for intake of water intake pipe. It causes the smoke introduced to the casing to rise together with the water present at the bottom from the introduction portions toward the discharge port while swirling in the vertical direction so as to lower the temperature and remove foreign matter and guides the lowered temperature and scrubbed air through the discharge port to outside the casing. Therefore, this aspect of the invention is characterized by the achievement of sufficient contact between the smoke and water and reliable rapid cooling utilizing the increase of the dwell time to efficiently treat the burned gas and prevent the production of dioxin, recovery of the foreign matter separated from the smoke in a solid mass, and usefulness in lowering the temperature of the burned gas.

The second and third aspects of the present invention each provides a casing, having introduction portions of the smoke, a discharge port for the treated air, and a blower, with at least one baffle plates having a rising passage, an internal bottom plate having a downflow port, and a pipe for water intake. It causes the smoke introduced to the casing to rise together with the water present at the bottom from the introduction portions toward the discharge port while swirling in the vertical direction so as to lower the temperature and remove foreign matter and guides the lowered temperature and scrubbed air through the discharge port to outside the casing. Therefore, these aspects of the invention are each characterized by the achievement of sufficient contact between the smoke and water and reliable rapid cooling utilizing the increase of the dwell time to efficiently treat the burned gas and prevent the production of dioxin, the recovery of the foreign matter separated from the smoke in a solid mass, etc.

The fourth aspect of the present invention guides the smoke of the incinerator through a flue to the smoke treatment apparatus, removes the foreign substances in the smoke through contact with the water of the smoke treatment apparatus and separation, and guides the treated air through a pipe to a deodorizer to remove the odor. Therefore, it is characterized by the ability to eliminate the production of dioxin due to smoke treatment and reliably achieve prevention of the production of dioxin using a simple system.

While the invention has been described by reference to specific embodiments chosen for purposes of illustration, it should be apparent that numerous modifications could be made thereto by those skilled in the art without departing from the basic concept and scope of the invention.

## Claims

1. A smoke treatment apparatus comprising a casing having a plurality of through holes, slits, or other introduction portions for intake of smoke and a discharge port for the treated gas, air, or other gas, an internal bottom plate provided at the bottom of the casing, a downflow port provided in the internal bottom plate, a pipe for intake of water provided at the bottom part of the casing, and a blower provided at the discharge port,
the smoke treatment apparatus causing the smoke introduced to the casing to rise together with the water present at the bottom from the introduction portions toward the discharge port while swirling in the vertical direction so as to lower its temperature and remove foreign matter and guiding the lowered temperature and scrubbed air through the discharge port to outside the casing.

2. A smoke treatment apparatus comprising a casing having plurality of through holes, slits, or other introduction portions for intake of smoke and a discharge port for the treated gas, air, or other gas, at least one baffle plate provided at the casing and having a rising passage, an internal bottom plate provided at the bottom of the casing, a downflow port provided in the internal bottom plate, a pipe for intake of water provided at the bottom of the casing, and a blower provided at the discharge port,
the smoke treatment apparatus causing the smoke introduced to the casing to rise together with the water present at the bottom from the introduction portions toward the discharge port while swirling in the vertical direction so as to lower its temperature and remove foreign matter and guiding the lowered temperature and scrubbed air through the discharge port to outside the casing.

3. A smoke treatment apparatus comprising a casing having a plurality of through holes, slits, or other introduction portions for intake of smoke and a discharge port for the treated gas, air, or other gas, at least one baffle plate provided spaced from each other at the casing and each having a rising passage, an internal bottom plate provided at the bottom of the casing, a downflow port provided in the internal bottom plate, a pipe for intake of water provided at the bottom of the casing, a suppression plate provided above the baffle plates of the casing, a discharge passage provided between the suppression plate and the casing, and a blower provided at the discharge port communicated with the discharge passage,
the smoke treatment apparatus causing the smoke introduced to the casing to rise together with the water present at the bottom from the introduction portions toward the discharge port while swirling in the vertical direction so as to lower its temperature and remove foreign matter and guiding the lowered temperature and scrubbed air through the discharge port to outside the casing.

4. A smoke treatment system comprised of an incinerator, at least one smoke treatment apparatus comprised of a casing having a plurality of through holes, slits, or other introduction portions for intake of smoke communicated with the incinerator through a flue and a discharge port for the treated gas, air, or other gas, an internal bottom plate provided at the bottom of the casing, a downflow port provided in the internal bottom plate, a pipe for intake of water provided at the bottom of the casing, and a blower provided at the discharge port, and a deodorizer,
the smoke treatment system causing the smoke introduced to the casing to rise together with the water present at the bottom of the casing of one smoke treatment apparatus from the introduction portions toward the discharge port while swirling so as to lower the temperature and remove foreign matter and guiding the lowered temperature and scrubbed air through the discharge port and pipe to another smoke treatment apparatus of the same configuration to scrub it, guiding the scrubbed air to the deodorizer, and deodorizing it by the deodorizer.
